# EUROPEAN PATENT APPLICATION

(11) **EP 0 954 111 A1**
(43) Date of publication of application: **03.11.1999**
(21) Application number: 98107633.4
(22) Date of filing: 27.04.1998
(51) Int. Cl.: H04B 1/707, H04B 7/26

(54) **Radio communications apparatus and method of communicating control data for use in a radio communications apparatus**

(71) Applicant: SIEMENS AKTIENGESELLSCHAFT, 80333 München (DE)
(72) Inventor: Klein, Anja, Dr., 80999 München (DE); Färber, Michael, 82515 Wolfratshausen (DE); Kottkamp, Meik, 81369 München (DE)

(57) **Abstract**

Radio communications apparatus comprising, a plurality of transmitter means (BS), each of which transmitter means (BS) operates to transmit a sequence of control data represented as coded control signals (cb) using a radio frequency carrier signal (cs), said coded control signals being generated from the same code (cc) by the transmitter means (BS), said radio frequency carrier signal being transmitted in substantially the same part of the radio frequency spectrum by each transmitter means, wherein said coded control signals (cb) includes a training sequence (ts) indicative of the transmitter means (BS) from which said control signals (cb) are transmitted, whereby at least one receiver (rx) can detect and recover said control data from the carrier signal and determine which of said transmitter means transmitted said coded signals. The radio communications apparatus may form part of a mobile radio communications system which operates in accordance with TD-CDMA.

## Description

The present invention relates to radio communications apparatus and methods of communicating control data for use in a radio communications system. Furthermore the present invention relates to radio communications apparatus arranged to form a mobile radio communications system.

Data is communicated by radio communications apparatus using radio signals by modulating the radio signals with the data in some way, and transmitting the radio signals via the ether to a receiver of the apparatus. The radio signals are detected by the receiver, which re-generates the data represented by the radio signals.

When the receiver is activated, it is often necessary for the receiver to be provided with control data representative of information and parameters required to configure the receiver so that the received radio signals may be correctly processed, in order for data to be recovered.

Mobile radio telephone systems, for example, are provided with radio communications apparatus in which control data is communicated to receivers embodied within mobile stations, so that the receivers may be configured to detect radio signals and to recover data represented by the radio signals. In this way mobile radio telephone systems serve to provide mobile stations with a means for receiving data via the radio signals whilst the mobile stations move within a radio coverage area provided by the mobile radio system. The mobile radio systems are provided, *inter alia,* with a plurality of interconnected base stations which form a mobile radio network. Associated with each base station is a geographical area within which a mobile unit can effect communication of data via radio signals with the base station, in preference to another base station. This geographical area is known as a cell, and together the cells provided by the base stations of the mobile radio network provide a combined radio coverage area to the effect that mobiles may roam within the coverage area whilst enjoying substantially uninterrupted communications.

Mobile radio telephone systems are arranged to provide a plurality of communications channels through which communication with mobiles may be contemporaneously supported. In a system such as the known system the Global System for Mobiles (GSM), a radio frequency spectrum allocated to the mobile radio system is divided into a number of parts in which carrier frequency signals for communicating data are transmitted. Furthermore, the GSM system is provided with means to divide the communication of data on each of the radio frequency carrier signals into a number of time slots. By arranging for mobile units to be allocated one of the plurality of time slots within a pre-determined repetitive frame of time slots, a plurality of mobiles may be supported on each of the carrier frequency radio signals provided by the mobile radio system. However, mobile stations require knowledge of the time slots and carrier signals. This knowledge is provided by control data.

Control data is communicated to the mobile stations in the GSM system via a dedicated control channel known as the BCCH. The BCCH is communicated by the base stations of the system on a common frequency, known to all mobile stations. Dormant mobiles which become active, or mobiles entering the radio coverage area of the network, are arranged to detect the BCCH and recover control data communicated thereby. The control data includes information appertaining to carrier frequency signals via which the mobile station may transmit or receive data, and synchronisation information and information of the time slot structure associated with the position of data bearing and control data bearing time slots.

Although providing the control information necessary to configure the receivers within the mobile stations, the GSM system has a disadvantage in that a part of a carrier frequency signal is dedicated to the BCCH control channel, which therefore occupies a portion of the radio frequency spectrum which could have been allocated to data bearing communications channels. This, therefore, represents a reduction in capacity in terms of the number of communications channels which could have been supported by the GSM system.

The GSM system is an example of a second generation mobile radio system. Third generation mobile radio systems are known to be provided with communications apparatus which have means to communicate data using radio signals by combining the data with a predetermined sequence of symbols known as a spreading code. At a receiver of the system, data is recovered by comparing the received radio signals with the spreading code, which is known to the receiver. The communication of data in this way is known as Code Division Multiple Access (CDMA). As with second generation systems, receivers operating within a CDMA system require control information in order to configure the receivers so that data may be recovered from the detected CDMA radio signals.

It is an object of the present invention, therefore, to provide a radio communications system with means for communicating control data to receivers, in which the communication of data is effected by CDMA radio signals.

According to the present invention, there is provided a method of communicating control data for use in a radio communications system, said method comprising the steps of,
- for each of a plurality of transmitters providing a radio frequency carrier signal, which carrier signal occupies the same part of the radio frequency spectrum for each transmitter;
- representing said control data as coded control signals generated from the same code by each transmitter
- transmitting said coded signals contemporaneously from each of said transmitters using said carrier signal, and
- receiving said carrier signal at a receiver and recovering said control data from at least one of said transmitters by recovering said coded signals.

By arranging for each transmitter of the radio communications system to transmit control data using the same code, which may for example be a spreading code, a receiver may recover the control data by detecting the carrier signal transmitted by any of the transmitters. As the same carrier signal is used to communicate data as well as the control data representative of control information, the present invention offers a substantial advantage in that unlike known radio systems, a dedicated part of a carrier signal is not required. Therefore, receivers can be provided with control data, communicated as coded signals, which may be contemporaneously communicated with other data between the transmitters and the receivers.

The present invention finds particular application in a third generation mobile radio system. CDMA radio systems separate radio signals contemporaneously transmitted by mobile stations from the spreading code used by each mobile station. As such, it is likely that third generation mobile radio systems will be arranged to operate with a single carrier signal transmitted in a common part of the radio frequency spectrum for all base stations of the system. As such, the present invention provides a means to communicate control data, contemporaneously on the single carrier of such a system.

Advantageously, the control data may be provided with a training sequence which may be different for each transmitter.

With a different training sequence being used by each transmitter, a receiver may distinguish between each of the transmitters for which the receiver is able to detect the carrier signal. This provides a substantial advantage in that a receiver may determine from, for example, the power of the detected carrier signal a ranking of the most appropriate transmitters through which data may be communicated.

The training sequence for each transmitter may be the same training sequence time shifted with respect to each other.

Each of the transmitters may further operate to detect the carrier frequency signal of surrounding transmitters, and to determine an appropriate shift of the training sequence used for the burst of control data by the transmitter to the effect of distinguishing the burst of control data from the bursts of control data transmitted by surrounding base transmitters.

According to a second aspect of the present invention, there is provided radio communications apparatus comprising;
- a plurality of transmitter means,
- each of which transmitter means operates to represent data from different sources as coded signals and to contemporaneously transmit said coded signals using a radio frequency carrier signal,
- said radio frequency carrier signal being transmitted in substantially the same part of the radio frequency spectrum by each transmitter means, wherein
   said transmitter means is further arranged to transmit a sequence of control data represented as coded control signals using said carrier signal, said coded control signals being generated from the same code by the transmitter means, whereby at least one receiver can detect and recover said control data from the carrier signal transmitted by any of said transmitters.

According to a third aspect of the present invention, there is provided radio communications apparatus comprising;
- a plurality of transmitter means,
- each of which transmitter means operates to transmit a sequence of control data represented as coded control signals using a radio frequency carrier signal, said coded control signals being generated from the same code by the transmitter means,
- said radio frequency carrier signal being transmitted in substantially the same part of the radio frequency spectrum by each transmitter means, wherein
   said coded control signals include a training sequence indicative of the transmitter means from which said control signals are transmitted, whereby at least one receiver can detect and recover said control data from the carrier signal and determine which of said transmitter means transmitted said coded signals.

One embodiment of the present invention will now be described, by way of example only, with reference to the accompanying drawings, wherein;
- FIGURE 1: is a schematic block diagram of part of a mobile radio telephone system;
- FIGURE 2: is a schematic block diagram of one of the base stations shown in Figure 1;
- FIGURE 3: is a representation of a carrier signal via which the base station shown in Figure 2, and the mobile stations shown in Figure 1 are arranged to communicate; and
- FIGURE 4: is a schematic block diagram of one of the mobile stations, shown in Figure 1.

An example embodiment of the present invention will be described with reference to a mobile radio telephone system operating in accordance with a time-division code division multiple access (TD-CDMA)-system. However, as will be clear from the following description of the example embodiment, the invention finds application in radio systems operating in accordance with other multiple access schemes.

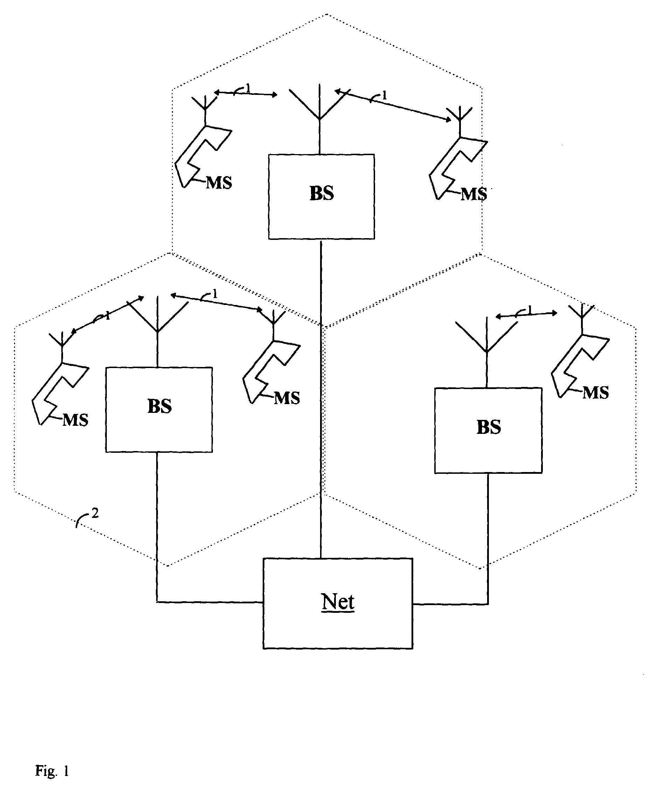

An illustration of part of a mobile radio system is shown in Figure 1. In Figure 1 three base stations BS are shown to be interconnected via a mobile network infra-structure Net. Data is communicated between mobile stations MS and the base stations BS, by transmitting and receiving radio signals 1, within a radio coverage area effected by each of the base stations. The radio coverage area is illustrated as a broken line 2, and serves to indicate a boundary within which radio communications can be effected with the mobile stations MS. In the present illustrative embodiment the mobile stations MS communicate with the base stations BS using radio signals generated in accordance with TD-CDMA. A more detailed explanation of the TD- CDMA system is provided in an article, entitled 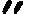 Performance of a Cellular Hybrid C-TDMA Mobile Radio System Applying Joint Detection and Coherent Receiver Antenna Diversity" by G. Blanz, A. Klein, M. Naßhan and A. Steil published in the IEEE Journal on Selected Areas in Communications, Volume 12, no. 4, May 1994 at page 568, the content of which is incorporated herein by reference. However for the present explanation it should be noted that communications using TD-CDMA systems is characterised in that radio frequency carrier signals via which communication of data is effected are divided into a plurality of time-slots. Each of these time-slots is assigned to a plurality of mobile stations which operate to communicate radio signals in the same time-slot. In order to separate data communicated by the plurality of mobiles assigned to the same time-slot, each mobile is provided with a user specific code which is convolved with the data to be communicated. A receiver of the radio signals must therefore operate to separate data communicated by other mobile stations MS contemporaneously. Correspondingly, data communicated from the base stations BS, to the mobile stations MS, is similarly convolved with an individual spreading code and transmitted in a corresponding time slot contemporaneously with other coded signals.

The separation and regeneration of data communicated by mobile stations contemporaneously in the same time-slot is achieved with known receivers of TD-CDMA-signals by estimating the signals transmitted by other unwanted mobiles within the same time-slot, and subtracting the unwanted signals from the wanted signal.

A third generation mobile radio telephone system which operates in accordance with TD-CDMA, may be arranged to communicate data between the base stations and the mobile stations in accordance with a Time Division Duplex (TDD) frame structure, in that transmission of radio signals from the base stations to the mobile stations (down-link) and transmission of radio signals from the mobile stations to the base stations is arranged to be at different times on the same radio frequency carrier signal, divided in time into different parts for this purpose. Furthermore, since radio signals representative of the data communicated by different mobile stations are transmitted contemporaneously, but separated by using different spreading codes, the same carrier frequency signal may be used throughout the mobile radio network. As such the frequency re-use factor is one. i.e. there is no re-use of frequencies, so that all communications must be effected using the same carrier frequency.

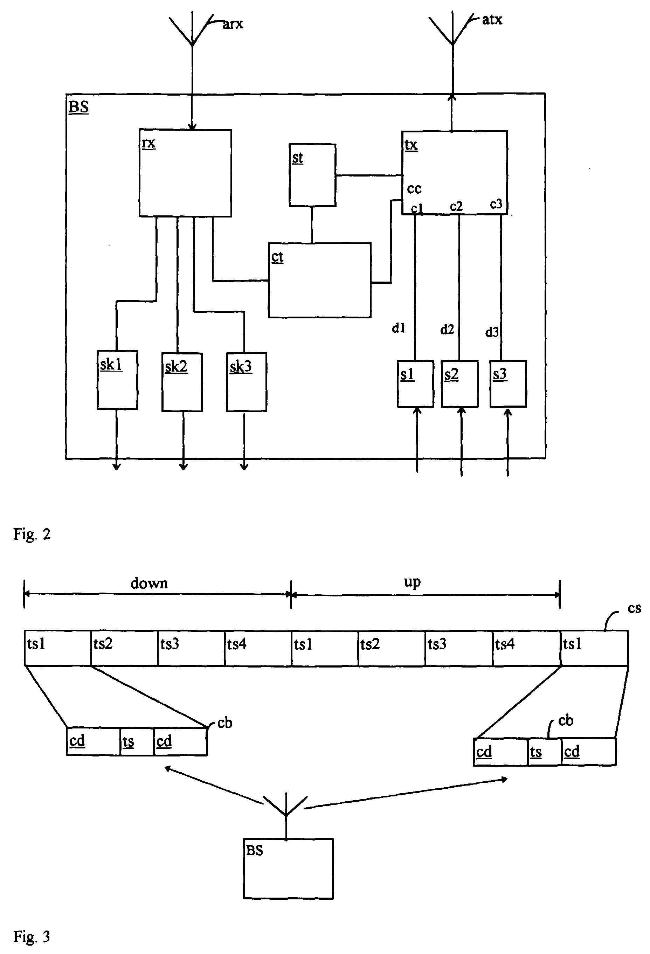

An illustration of one of the base stations BS is provided in Figure 2, where parts also appearing in Figure 1 bear identical numerical designations. In Figure 2, a base station BS, is shown to include a transmitter tx, with an associated transmit antenna atx, a controller ct, and a receiver rx. Data d1, d2, d3, is generated from different sources s1, s2, s3, respectively, and fed to the transmitter tx. The transmitter tx, operates to generate coded signals representative of the data by convolving the data d1, d2, d3, with one of a corresponding number of spreading codes c1, c2, c3, which are respectively associated with the sources s1, s2, s3. The transmitter is thereafter arranged to modulate a carrier frequency signal with the coded signals from each source , which is thereby contemporaneously transmitted.

At a receiver embodied within the mobile station MS (not shown), the data is recovered, as explained above, by comparing the received carrier signal with the spreading code c1, c2, c3, with which it was convolved.

Also in Figure 2, the controller ct, as shown to be coupled to the transmitter tx, and to a data store st. Furthermore, the receiver rx, is coupled to a receiver antenna arx. Radio signals detected by the receive antenna arx, are conveyed to the receiver rx, which serves to recover data from individual mobile stations which are thereafter fed to a corresponding connection for the data sk1, sk2, sk3.

An explanation of the operation of the example embodiment will now be provided with reference to Figure 3, which provides an schematic illustration of the transmission of signals on a radio frequency carrier generated at the transmit antenna atx, by the base station BS, with time going from left to right across the page. As already explained, the carrier frequency generated by the base station, is divided into time slots ts1, ts2, ts3, ts4. Data from different sources is represented as coded signals and contemporaneously transmitted in one of the time slots. The same time slot may be shared by more than one mobile station.

When a mobile station MS first enters a radio coverage area provided by the mobile radio network, or when a dormant mobile station is activated, it must be provided with control information, with which to configure itself. This control information is transmitted by each base station of the system in the same time slot ts1, using the same code cc. The base station generates a control burst cb, which includes the control data cd, and a training sequence ts, which identifies the base station, to the effect of distinguishing the base station from surrounding base stations. The data from which the control burst cb is comprised is then convolved with the code cc, and transmitted using a carrier signal provided to the base station BS. The effect of convolution with the spreading code cc, is to spread the frequency of the transmitted signals. Furthermore, the spreading code cc, may be generated from the same basic code cc, by each base station BS, but shifted in time with respect to each other. Deriving the spreading code for the coded control signals by time shifting the same basic code further facilitates identification of individual base stations by the mobile stations, from the time shift of the basic code.

In the example embodiment shown in Figure 2, the controller ct, operates to retrieve the training sequence ts, from the data store st, and to form the control burst cb, with the control data cd. The control burst is then sent to the transmitter tx, and arranged to be convolved with the common spreading code cc, and transmitted on the carrier signal in the first time slot ts1. As described above, the spreading code cc, is used to derive the spreading code by all base stations in the network, and the transmitter tx, under control of the controller ct, transmits the convolved or coded signals in the same pre-designated time slots.

As illustrated in Figure 3, the base station is arranged to only transmit data in the first half of the TDD time frame, down. The second half of the TDD time frame is used by mobiles to transmit radio signals to the base stations, up.

A further advantageous feature of the example embodiment is provided by arranging for the training sequence to be formed in each base station from the same basic sequence. German patent serial No. DE 42 12 300 (Steiner et al) discloses that such a sequence can be used to identify each base station by cyclically time shifting the same common sequence, to the effect that a base station can be distinguished from surrounding base stations from a corresponding shift of the sequence.

Providing the same basic sequence for use as the training sequence with the control burst cb, facilitates self configuration of the base station. For example after installation of the base station bs, the base station is arranged in a 'set-up' mode to detect the carrier signal transmitted by each surrounding base station BS, by appropriately configuring the receiver rx, under control of the controller ct. The receiver rx, operates to recover the control burst cb, for each surrounding base station by de-spreading the coded control signals detected in the pre-designated time slot ts1. The recovered control burst is thereafter fed to the controller ct, which operates to determine the amount of shift of the basic common sequence which has been use to generate the training sequence for each of the surrounding base station. The controller ct, then determines the cyclic shift of the basic sequence required to distinguish its control burst cb, from the surrounding base stations bs, by appropriately cyclically shifting the basic sequence, to form the training sequence ts which it will use to generate the control burst cb.

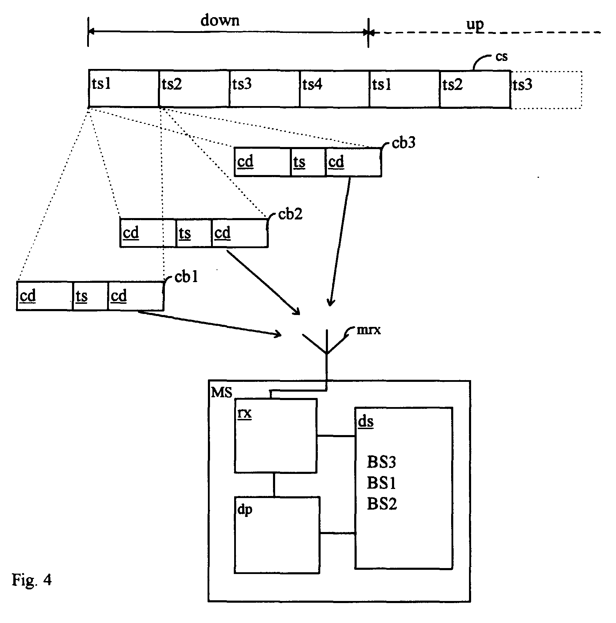

As already explained, a mobile station MS, is arranged to detect the carrier signal from the base stations and to regenerate the control burst, by recovering and de-spreading the coded control signals. A diagram of an example mobile station MS is shown in Figure 4, which also includes part of the carrier signal represented in Figure 3. Referring to Figure 4, three bursts of coded signals cb1, cb2, cb3, are shown to be transmitted in the first time slot ts1, of the carrier signal cs. Also shown in Figure 4, is a mobile station MS, having an antenna ma, which is arranged to detect each of the bursts of coded signals cb1, cb2, cb3,conveyed by the carrier signals cs, transmitted by each base station. The detected coded signals are fed to a receiver mrx, which regenerates the burst of control data, including the training sequences ts1, ts2, ts3, ts4, and the control data cd, for each of the bursts of coded signals cb1, cb2, cb3. Furthermore, the receiver mrx, operates to determine the power of the carrier signal with which each of the bursts of control data cb1, cb2, cb3, were received. The control data cd, and training sequences ts1, ts2, ts3, of each of the bursts of control signals cb1, cb2, cb3, are fed to a data processor dp,which operates to determine which control burst was transmitted by which of the base stations BS1, BS2, BS3. The data processor dp, determines which control burst was sent by which base station, from the time shift of the basic common sequence from which the training sequences ts1, ts2, ts3, were generated. The cyclic shift is specific to each base station and serves to identify each base station from the received training sequence ts1, ts2, ts3. The data processor dp, thereafter compares the power with which the control burst corresponding to each base station was received, from which a ranking of the base staions in the order of received signal power is determined. This ranking is stored in a data store along with the measured power of the control bursts. The ranking may then be used by the mobile station MS, to determine the most appropriate base station with which to communicate data, via radio signals.

The data processor dp, of the mobile station, furthermore, operates to determine which of the base stations BS, transmitted each of the bursts of coded control signals from the shift of the spreading code cc, which was used to generate the control signals.

To further illustrate a data rate which may be achieved for communicating control data using the control burst, calculation of an achievable data rate is presented in the following paragraphs:

The temporal length of the mid-amble training sequence is estimated as follows:

| | |
|---|---|
| Propagation time between base stations: | 12µs |
| Delay spread of the communications channel: | 7µs |
| Synchronisation error between mobile and base station: | 4µs |
| Chip pulse length: | <0,5µs |
| Total length of training sequence: | 25µs |

With a cell structure providing six surrounding cells, each mobile station should be arranged to detect control bursts from seven base stations, which corresponds to a total period of 200µs. There remains in a time slot with a temporal length of 625µs, 425µs for a control data. This will provided 1740 chips for conveying data, which represents 216 bits within a 10ms TDD time frame, which corresponds to 21.6 kbit/s.

As will be appreciated by those skilled in the art, various modifications may be made to the example embodiment as herein before described without departing from the scope of the present invention. In particular other multiple access schemes and modulation techniques may be used such a direct sequence CDMA. Furthermore, as will be appreciated, the role of base station BS, and the mobile stations, may be interchanged, in that the mobile stations may be provided with transmitters arranged to transmit the coded control signals, and the base stations provided with receivers arranged to detect the control signals.

## Claims

1. A method of communicating control data for use in a radio communications system, said method comprising the steps of,
- for each of a plurality of transmitters (BS) providing a radio frequency carrier signal, which carrier signal occupies the same part of the radio frequency spectrum for each transmitter (BS);
- representing said control data as coded control signals generated from the same code by each transmitter (BS)
- transmitting said coded signals contemporaneously from each of said transmitters (BS) using said carrier signal, and
- receiving said carrier signal at a receiver and recovering said control data from at least one of said transmitters by
recovering said coded signals.

2. A method of communicating control data as claimed in Claim 1, further comprising the steps of;
- generating, for each transmitter, a training sequence, which training sequence is indicative of the transmitter from which the training sequence was generated; and
- transmitting with said coded control signals said training sequence.

3. A method of communicating control data as claimed in Claim 2, further comprising the steps;
- receiving a plurality of said carrier signals transmitted by a corresponding plurality of said transmitters;
- recovering from each of said carrier signals said coded control signals;
- identifying from the training sequence of the coded signals the transmitter from which said control signals were transmitted; and
- determining which of said plurality of transmitters is most appropriate for effecting communication of data between said transmitter and a receiver.

4. A method of communicating control data as claimed in Claims 2 or 3, wherein the step of generating the training sequence comprises the step of;
- arranging for the training sequence of at least two of said plurality of transmitters to be different from each other.

5. A method of communicating control data as claimed in Claim 4, wherein the step of arranging for the training sequence to be different for each of said at least two transmitters comprises the steps of;
- time shifting the same basic sequence, used to form the training sequence in each of said transmitters, by an amount indicative of each transmitters.

6. A method of communicating control data as claimed in Claim 5, wherein the step of generating the training sequence further includes the steps of;
- at each of said transmitters detecting said carrier signal and recovering said coded signals transmitted by others of said at least two transmitters;
- recovering said training sequence transmitted with said coded signals;
- identifying a shift of said basic sequence used to form said recovered training sequences;
- determining a corresponding shift of said basic sequence sufficient to identify the transmitter from said other transmitters; and
- generating said training sequence in accordance with said corresponding shift.

7. A method of communicating control data as claimed in any preceding Claim, wherein the step of representing said control data as coded control signals includes the step of;
- time shifting the same basic code, used to form the coded control signals in each of said transmitters, which time shift is indicative of each of said transmitters.

8. A method of communicating control data as claimed in any preceding claims, wherein the step of transmitting said coded control signals further includes the steps of;
- dividing said carrier signal into a plurality of time slots; and
- transmitting coded signals in at least one of said time slots commonly designated to each of said transmitters.

9. Radio communications apparatus comprising;
- a plurality of transmitter means (BS),
- each of which transmitter means (BS) operates to represent data from different sources as coded signals and to contemporaneously transmit said coded signals using a radio frequency carrier signal (cs),
- said radio frequency carrier signal being transmitted in substantially the same part of the radio frequency spectrum by each transmitter means, wherein
said transmitter means is further arranged to transmit a sequence of control data (cd) represented as coded control signals (cb) using said carrier signal (cs), said coded control signals being generated from the same code (cc) by the transmitter means, whereby at least one receiver (MS) can detect and recover said control data from the carrier signal transmitted by any of said transmitters.

10. Radio communications apparatus as claimed in Claim 9, wherein said carrier signal is divided into a plurality of time slots, and said coded control signals are contemporaneously transmitted by each of the transmitter means in at least one commonly designated time slot.

11. Radio communications apparatus as claimed in Claims 9 or 10, wherein said control data further includes a training sequence (ts).

12. Radio communications apparatus as claimed in Claim 11, wherein the training sequence of the control data is different for at least two of said transmitter means.

13. Radio communications apparatus as claimed in Claim 12, wherein the training sequence which is different for each of said transmitter means is a common sequence time shifted by a different amount with respect to each other for each of said transmitter means.

14. Radio communications apparatus as claimed in any of claims 9 to 13, wherein said coded signals are generated in accordance with code division multiple access, said codes being spreading codes or sequences.

15. Radio communications apparatus as claimed in any of claims 9 to 14, wherein each of said transmitter further includes;
- a receiver means arranged to detect the carrier signal generated by other transmitters, and to recover the training sequence from the coded control signals conveyed by said carrier signal, and
- a controller which operates to determine a corresponding shift of said common sequence indicative of the transmitter means, in accordance with the shift in the training sequences of the recovered coded control signals.

16. Radio communications apparatus as claimed in any of claims 9 to 15, and further including a receiver arranged to detect the carrier signal transmitted by each transmitter means (BS) and a data processor which operates to determine from the received coded signals which of said transmitters is most appropriate for effecting communication of data.

17. Radio communications apparatus comprising;
- a plurality of transmitter means (BS),
- each of which transmitter means (BS) operates to transmit a sequence of control data represented as coded control signals (cb) using a radio frequency carrier signal (cs), said coded control signals being generated from the same code (cc) by the transmitter means (BS),
- said radio frequency carrier signal being transmitted in substantially the same part of the radio frequency spectrum by each transmitter means, wherein
said coded control signals (cb) includes a training sequence (ts) indicative of the transmitter means (BS) from which said control signals (cb) are transmitted, whereby at least one receiver (rx) can detect and recover said control data from the carrier signal and determine which of said transmitter means transmitted said coded signals.

18. Radio communications apparatus as claimed in Claim 17, wherein said carrier signal is divided into a plurality of time slots, and said coded control signals are contemporaneously transmitted by each of the transmitter means in at least one commonly designated time slot.

19. Radio communications apparatus as claimed in any of Claims 17 or 18, wherein the training sequence which is indicative of each transmitter means is a common sequence time shifted by a different amount with respect to each other for each of said transmitter means.

20. Radio communications apparatus wherein, said coded signals are generated in accordance with code division multiple access, said codes being spreading codes or sequences.

21. Radio communications apparatus as claimed in any of claims 17 to 20, wherein the coded control signals are generated by each of said transmitters from the same code, time shifted respectively by each of said transmitters, which time shift is indicative of the transmitter means from which said code was generated.

22. A mobile radio communications apparatus, having radio communications apparatus as claimed in any of claims 9 to 16, or 17 to 21, comprising a plurality of base stations (BS) each of which is provided with one of said transmitter means, and at least one mobile station (MS), which is provided with the receiver.

23. A mobile radio communications apparatus as claimed in Claim 22, wherein said at least one mobile station, is further provided with a data processor (dp) coupled to a data store (ds), the receiver of said mobile station operating to detect said coded control signals (cb) and to determine the power with which said coded control signals are received, and to re-generate the control data and training sequence which said coded control signals represent, and wherein said data processor operates to distinguish which of said plurality of base stations transmitted said detected coded control signals, from the time shift of at least one of said training sequence and said same code, and to rank said base stations in an order corresponding to the most appropriate base station with which to communicate data, which order is stored in said data store (ds).

24. A mobile radio communications apparatus which operates in accordance with the method claimed in any of claims 1 to 8.

25. A mobile radio communications apparatus as claimed in claim 24, wherein a mobile station operates to;
- detect said coded control signals from at least two of said transmitters,
- determine for each of said detected coded control signals the power with which said coded control signals were received,
- identify which of said transmitters said coded signals were transmitted from the time shift of at least one of said training sequence and the code from which said coded control signals were generated, and
- consequent upon said determined received signal power and said identification, rank said transmitters in an order corresponding to which of said transmitters is most appropriate for communicating data.
